(19) **Europäisches Patentamt / European Patent Office / Office européen des brevets**

(11) **EP 4 535 229 A1**

(12) **EUROPEAN PATENT APPLICATION**
published in accordance with Art. 153(4) EPC

(43) Date of publication:
**09.04.2025 Bulletin 2025/15**

(21) Application number: **23814979.3**

(22) Date of filing: **18.05.2023**

(51) International Patent Classification (IPC):
***G06N 3/04*** *(2023.01)*

(86) International application number:
**PCT/CN2023/095019**

(87) International publication number:
**WO 2023/231794 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.05.2022 CN 202210600648**

(71) Applicant: **Huawei Technologies Co., Ltd.
Shenzhen, Guangdong 518129 (CN)**

(72) Inventors:
• **NIE, Ying**
 **Shenzhen, Guangdong 518129 (CN)**
• **HAN, Kai**
 **Shenzhen, Guangdong 518129 (CN)**
• **LIU, Chuanjian**
 **Shenzhen, Guangdong 518129 (CN)**
• **MA, Junhui**
 **Shenzhen, Guangdong 518129 (CN)**
• **WANG, Yunhe**
 **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **NEURAL NETWORK PARAMETER QUANTIFICATION METHOD AND APPARATUS**

(57) This application provides a neural network parameter quantization method and apparatus in the field of artificial intelligence, to quantize a neural network, reduce a precision loss during low-bit quantization, and obtain a lightweight model with a more accurate output. The method includes: obtaining a parameter of each neuron in a to-be-quantized model, to obtain a parameter set; clustering parameters in the parameter set to obtain a plurality of types of classified data; and quantizing each type of classified data in the plurality of types of classified data to obtain at least one type of quantization parameter, where the at least one type of quantization parameter is used to obtain a compression model, and precision of the at least one type of quantization parameter is lower than precision of a parameter in the to-be-quantized model.

Obtain a parameter of each neuron in a to-be-quantized model, to obtain a parameter set — 701

Cluster the parameter set to obtain a plurality of types of classified data — 702

Quantize each type of data in at least type of classified data to obtain at least one type of quantization parameter — 703

FIG. 7

**Description**

This application claims priority to Chinese Patent Application No. 202210600648.7, filed with the China National Intellectual Property Administration on May 30, 2022 and entitled "NEURAL NETWORK PARAMETER QUANTIZATION METHOD AND APPARATUS", which is incorporated herein by reference in its entirety.

**TECHNICAL FIELD**

This application relates to the field of artificial intelligence, and in particular, to a neural network parameter quantization method and apparatus.

**BACKGROUND**

Model compression is a common technique for constructing a lightweight neural network. Generally, FP32 (32-bit floating-point data) is used for storage in neural network models. It is found through research that a neural network has good robustness, and precision of a parameter of a large neural network is reduced through quantization, coding, and the like, so that the neural network can still maintain good performance. Common low-precision data includes numerical formats such as FP16 (half-precision floating point), INT16 (16-bit fixed-point integer), INT8 (8-bit fixed-point integer), INT4 (4-bit fixed-point integer), and 1-bit. With network performance and a model compression degree comprehensively considered, a weight parameter is converted from a 32-bit floating-point (FP32) to an 8-bit fixed-point integer (INT8). This is a common quantization method.

However, during quantization, especially for an adder network, a precision loss is large during low-bit quantization. Therefore, how to reduce the precision loss during low-bit quantization becomes an urgent problem to be resolved.

**SUMMARY**

This application provides a neural network parameter quantization method and apparatus, to quantize a neural network, reduce a precision loss during low-bit quantization, and obtain a lightweight model with a more accurate output.

In view of this, according to a first aspect, this application provides a neural network parameter quantization method, including: obtaining a parameter of each neuron in a to-be-quantized model, to obtain a parameter set; clustering parameters in the parameter set to obtain a plurality of types of classified data; and quantizing each type of classified data in the plurality of types of classified data to obtain at least one type of quantization parameter, where the at least one type of quantization parameter is used to obtain a compression model, and precision of the at least one type of quantization parameter is lower than precision of a parameter in the to-be-quantized model.

Therefore, in this implementation of this application, parameters of a neural network are clustered and then quantized, and parameters of each classification are separately quantized. This can improve an expression capability of a model.

In a possible implementation, the clustering the parameter set to obtain a plurality of types of classified data may include: clustering the parameter set to obtain at least one type of clustered data; and extracting a preset quantity of parameters from each type of clustered data in the at least one type of clustered data, to obtain the plurality of types of classified data.

Therefore, in this implementation of this application, each type of classification parameters are truncated after clustering, to reduce outliers in each classification and improve a subsequent model expression capability.

In a possible implementation, the parameter in the to-be-quantized model includes a parameter in a feature output by each neuron or a parameter value in each neuron. Therefore, in this implementation of this application, both an internal parameter of and a feature value output by each neuron in the neural network are quantized, to reduce bits occupied by a quantized model, to obtain a lightweight model.

In a possible implementation, the to-be-quantized model includes an adder neural network. Therefore, in this implementation of this application, for an adder network, if neurons share a scaling coefficient, a model expression capability is reduced. If a multiplication convolution quantization manner is used, scaling coefficients of weight data and input features may be different. Therefore, in a manner provided in this application, parameters may be clustered, and each type of parameter is quantized, to improve an expression capability of a compressed model, and avoid a non-INT8 value after quantization.

In a possible implementation, the compression model is used to perform at least one of image recognition, a classification task, or target detection. Therefore, the method provided in this application may be applicable to a plurality of scenarios, and has a strong generalization capability.

According to a second aspect, this application provides a neural network parameter quantization apparatus, including:

an obtaining module, configured to obtain a parameter of each neuron in a to-be-quantized model, to obtain a parameter set;

a clustering module, configured to cluster the parameter set to obtain a plurality of types of classified data; and

a quantization module, configured to quantize each type of classified data in the plurality of types of classified data to obtain at least one type of quantization parameter, where the at least one type of quantization parameter is used to obtain a compression model, and precision of the at least one type of quantization parameter is lower than precision of a parameter in the to-be-quantized model.

In a possible implementation, the clustering module is specifically configured to: cluster the parameter set to obtain at least one type of clustered data; and extract a preset quantity of parameters from each type of clustered data in the at least one type of clustered data, to obtain the plurality of types of classified data.

In a possible implementation, the parameter in the to-be-quantized model includes a parameter in a feature output by each neuron or a parameter value in each neuron.

In a possible implementation, the to-be-quantized model includes an adder neural network.

In a possible implementation, the compression model is used to perform at least one of image recognition, a classification task, or target detection.

According to a third aspect, an embodiment of this application provides a neural network parameter quantization apparatus, including a processor and a memory. The processor and the memory are interconnected through a line, and the processor invokes program code in the memory to perform a processing-related function in the neural network parameter quantization method in the first aspect. Optionally, the neural network parameter quantization apparatus may be a chip.

According to a fourth aspect, an embodiment of this application provides a neural network parameter quantization apparatus. The neural network parameter quantization apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in the first aspect or any one of the optional implementations of the first aspect.

According to a fifth aspect, an embodiment of this application provides a computer-readable storage medium including instructions. When the instructions are run on a computer, the computer is enabled to perform the method in the first aspect or any one of the optional implementations of the first aspect.

According to a sixth aspect, an embodiment of this application provides a computer program product including instructions. When the computer program product runs on a computer, the computer is enabled to perform the method in the first aspect or any one of the optional implementations of the first aspect.

## BRIEF DESCRIPTION OF DRAWINGS

FIG. 1 is a diagram of an artificial intelligence main framework to which this application is applied;
FIG. 2 is a diagram of a structure of a convolution kernel to which this application is applied;
FIG. 3 is a diagram of a structure of a convolutional neural network according to this application;
FIG. 4 is a diagram of a system architecture according to this application;
FIG. 5 is a diagram of another system architecture according to this application;
FIG. 6 is a diagram of a quantization manner according to this application;
FIG. 7 is a schematic flowchart of a neural network parameter quantization method according to this application;
FIG. 8 is a schematic flowchart of another neural network parameter quantization method according to this application;
FIG. 9 is a diagram of a parameter truncation manner according to this application;
FIG. 10 is a diagram of another parameter truncation manner according to this application;
FIG. 11 is a diagram of a structure of a to-be-quantized model according to this application;
FIG. 12 is a diagram of precision comparison between a solution proposed in this application and a common quantization solution for an adder network;
FIG. 13 is a structure of a neural network parameter quantization apparatus according to this application;
FIG. 14 is a structure of another neural network parameter quantization apparatus according to this application; and
FIG. 15 is a diagram of a structure of a chip according to this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

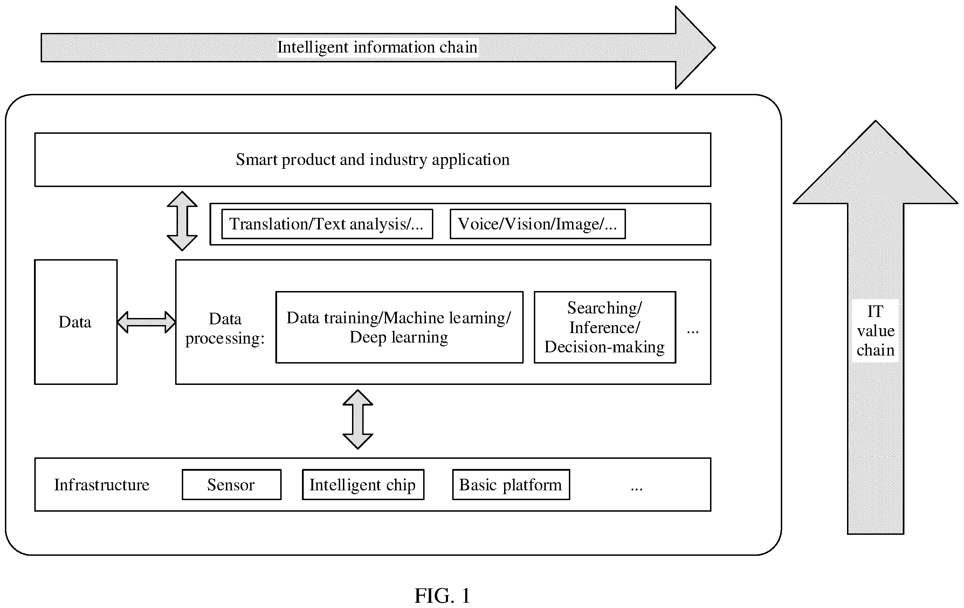

An overall working procedure of an artificial intelligence system is first described. FIG. 1 shows a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip, for example, a hardware acceleration chip such as a central processing unit (central processing unit, CPU), a network processing unit (neural-network processing unit, NPU), a graphics processing unit (English: graphics processing unit, GPU), an application-specific integrated circuit (application-specific integrated circuit, ASIC), or a field programmable gate array (field programmable gate array, FPGA). The basic platforms include related platforms, for example, a distributed computing framework and a network, for assurance and support. The basic platforms may include a cloud storage and computing network, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control. A typical function is searching and matching.

Decision-making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Smart product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent products and industry application mainly include intelligent terminals, intelligent transportation, intelligent health care, autonomous driving, smart cities, and the like.

Embodiments of this application relate to related applications of a large quantity of neural networks. To better understand solutions of embodiments of this application, the following first describes related terms and concepts of neural networks that may be in embodiments of this application.

(1) Neural network

The neural network may include a neural unit. The neural unit may be an operation unit that uses xs and an intercept 1 as an input, and an output of the operation unit may be shown in a formula:

$$h_{W,b}(x) = f(W^T x) = f(\sum_{s=1}^{n} W_s x_s + b)$$

$s = 1, 2, ..., n$, where $n$ is a natural number greater than 1, $W_s$ is a weight of $x_s$, and $b$ is bias of the neuron. $f$ is an activation function (activation function) of the neuron, and is used to introduce a non-linear feature into the neural network to convert an input signal in the neuron into an output signal. The output signal of the activation function may be used as an input of a next convolutional layer. The activation function may be a sigmoid function. The neural network is a network constituted by linking a plurality of single neural units together. To be specific, an output of a neural unit may be an input of another neural unit. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multilayer neural network, and may be understood as a neural network having a plurality of intermediate layers. Based on positions of different layers, neural network layers inside the DNN may be classified into three types: an input layer, an intermediate layer, and an output layer. Usually, a first layer is the input layer, a last layer is the output layer, and a middle layer is the intermediate layer, which is also referred to as a hidden layer. Layers are fully connected. To be specific, any neuron at an $i^{th}$ layer is necessarily connected to any neuron at an $(i+1)^{th}$ layer.

Although the DNN seems complex, each layer of the DNN may be represented as the following linear relationship expression: $\vec{y} = \alpha(w\vec{x} + \vec{b})$, where $\vec{x}$ is an input vector, $\vec{y}$ is an output vector, $\vec{b}$ is a bias vector, which is also referred to as a bias parameter, w is a weight matrix (which is also referred to as a coefficient), and $\alpha()$ is an activation function. At each layer, the output vector $\vec{y}$ is obtained by performing such a simple operation on the input vector $\vec{x}$. Because there are a plurality of layers in the DNN, there are also a plurality of coefficients W and a plurality of bias vectors $\vec{b}$. Definitions of the parameters in the DNN are as follows: The coefficient w is used as an example. It is assumed that in a DNN with three layers, a linear coefficient from a fourth neuron at a second layer to a second neuron at a third layer is defined as $W_{24}^{3}$. The superscript 3 indicates a layer at which the coefficient W is located, and the subscript corresponds to an output third-layer index 2 and an input second-layer index 4.

In conclusion, coefficients of a $k^{th}$ neuron at an $(L - 1)^{th}$ layer to a $j^{th}$ neuron at an $L^{th}$ layer are defined as $W_{jk}^{L}$.

It should be noted that the input layer does not have the parameters $W$. In the deep neural network, more intermediate layers make the network more capable of describing a complex case in the real world. Theoretically, a model with more parameters has higher complexity and a larger "capacity". This indicates that the model can complete a more complex learning task. A process of training the deep neural network is a process of learning a weight matrix, and a final objective of training is to obtain a weight matrix (a weight matrix formed by vectors W at a plurality of layers) at all layers of a trained deep neural network.

(3) Convolutional neural network

The convolutional neural network (convolutional neuron network, CNN) is a deep neural network with a convolutional structure. CNN has excellent features such as local perception and weight sharing, which can greatly reduce weight parameters and improve network performance. The CNN has made many breakthroughs in computer vision and image analysis, and has become the core technology of artificial intelligence and deep learning. The convolutional neural network includes a feature extractor that includes a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

(4) Recurrent neural network (recurrent neural network, RNN) The recurrent neural network is also referred to as a recursive neural network, and is used to process sequence data. In a conventional neural network model, from an input layer to an intermediate layer and then to an output layer, the layers are fully connected, but nodes in each layer are not connected. Although this common neural network has resolved a plurality of problems, this common neural network is still incapable of resolving a plurality of problems. For example, to predict a next word in a sentence, a previous word usually needs to be used, because the previous word and the next word in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes in the intermediate layer are no longer unconnected, but are connected, and input for the intermediate layer includes not only output of the input layer but also output of the intermediate layer at a previous moment. Theoretically, the RNN can process sequence data of any length. Training for the RNN is the same as training for a conventional CNN or DNN.

(5) Residual neural network (ResNet)

The residual neural network is proposed to resolve degradation (degradation) generated when there are too many hidden layers in a neural network. Degradation means that when there are more hidden layers in the network, accuracy of the network gets saturated and then degrades dramatically. In addition, degradation is not caused by overfitting. However, when backpropagation is performed, and backpropagation reaches a bottom layer, correlation between gradients is low, the gradients are not fully updated, and consequently, accuracy of a prediction label of a finally obtained model is reduced. When the neural network degrades, training effect of a shallow network is better than training effect of a deep network. In this case, if a feature at a lower layer is transmitted to a higher layer, effect is at least not worse than the effect of the shallow network. Therefore, the effect may be reached through identity mapping (identity mapping). Identity mapping is referred to as a shortcut (shortcut) connection, and it is easier to optimize shortcut mapping than to optimize original mapping.

(6) Multiplication neural network

For the foregoing neural networks, such as the CNN, the DNN, the RNN, or the ResNet, a multiplication convolution solution may be used. A core of the multiplication convolution solution is to extract a similarity between a filter and an input image through a convolution multiplication operation.

Generally, a multiplication convolution kernel may be represented as: $Y(m, n, t) = \Sigma\Sigma\Sigma S[X(m + i, n + j, k), F(i, j, k, t)]$

$S(x, y)$ represents a similarity between x and y, X represents an input image, F represents a filter for convolution calculation, i and j represent a horizontal coordinate and a vertical coordinate of a convolution kernel, k represents an input channel, and t represents an output channel.

(7) Adder neural network

A difference from the foregoing multiplication neural network lies in that the adder neural network may extract a similarity between an input image and a feature extractor through a subtraction operation on the input image and the feature extractor.

For example, an adder convolution kernel may be represented as: $Y(m, n, t) = -\Sigma\Sigma\Sigma |X(m + i, n + j, k) - F(i, j, k, t)|$.

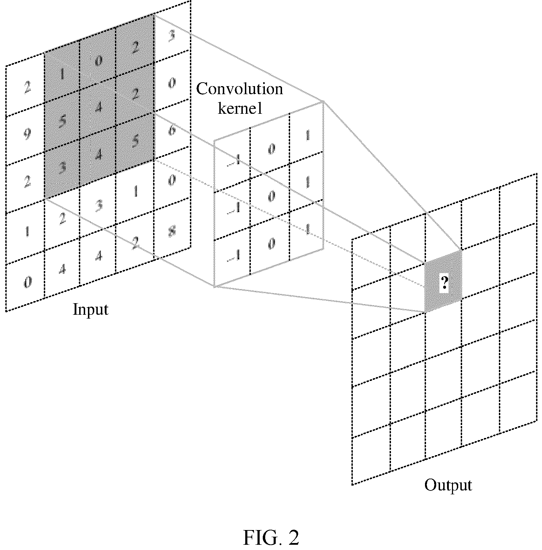

For ease of understanding, a difference between the multiplication convolution kernel and the adder convolution kernel is described by using an example. For example, the difference between the multiplication convolution kernel and the adder convolution kernel may be shown in FIG. 2. One of convolution kernels is used as an example. The convolution kernel may perform a convolution operation on an input matrix, to obtain an output after convolution. When the convolution kernel is a multiplication convolution kernel, a convolution operation of the multiplication convolution kernel is a multiplication operation. When the convolution kernel is an adder convolution kernel, a convolution operation of the convolution kernel is an addition operation, or is referred to as a subtraction operation. As shown in FIG. 2, a current to-be-operated

$$\begin{bmatrix} 1 & 0 & 2 \\ 5 & 4 & 2 \\ 3 & 4 & 5 \end{bmatrix}$$

matrix in an input matrix includes , and a matrix corresponding to the convolution kernel is

$$\begin{bmatrix} -1 & 0 & 1 \\ -1 & 0 & 1 \\ -1 & 0 & 1 \end{bmatrix}.$$

When the convolution kernel is a multiplication convolution kernel, an operation of the convolution kernel includes performing a multiplication operation on all elements in the input matrix and the convolution kernel, and for example, is represented as:

$$(-1) * 1 + 0 * 0 + 1 * 2$$
$$+ (-1) * 5 + 0 * 4 + 1 * 2$$
$$+ (-1) * 3 + 0 * 4 + 1 * 5$$
$$= 0$$

When the convolution kernel is an adder convolution kernel, an operation of the convolution kernel includes performing an addition operation on all elements in the input matrix and the convolution kernel, and for example, is represented as:

$$-|(-1) - 1| - |0 - 0| - |1 - 2|$$
$$-|(-1) - 5| - |0 - 4| - |1 - 2|$$
$$-|(-1) - 3| - |0 - 4| - |1 - 5|$$
$$= -26$$

(8) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (where certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(9) Back propagation algorithm

In a training process, a neural network may correct a value of a parameter of an initial neural network model by using an error back propagation (back propagation, BP) algorithm, so that a reconstruction error loss of the neural network model becomes increasingly smaller. Specifically, an input signal is transferred forward until an error loss occurs in an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

(10) Model quantization Model quantification is a model compression mode in which high bits are converted into low bits. For example, a model compression technology that converts a conventional 32-bit floating-point operation into a low-bit integer operation may be referred to as model quantization. For example, low-bit quantization being 8-bit quantization may be referred to as int8 quantization. To be specific, a weight needs to be represented by float32 originally, and only needs to be represented by int8 after quantization. Theoretically, four times of network acceleration can be implemented, and storage space of 8 bits can be four times less than that of 32 bits. This reduces storage space and computing time, thus compressing a model and implementing acceleration.

Generally, a CNN is a commonly used neural network. A neural network mentioned below in this application may include a convolutional neural network in which an adder convolution kernel or a multiplication convolution kernel is disposed. For ease of understanding, the following describes a structure of a convolutional neural network by using an example.

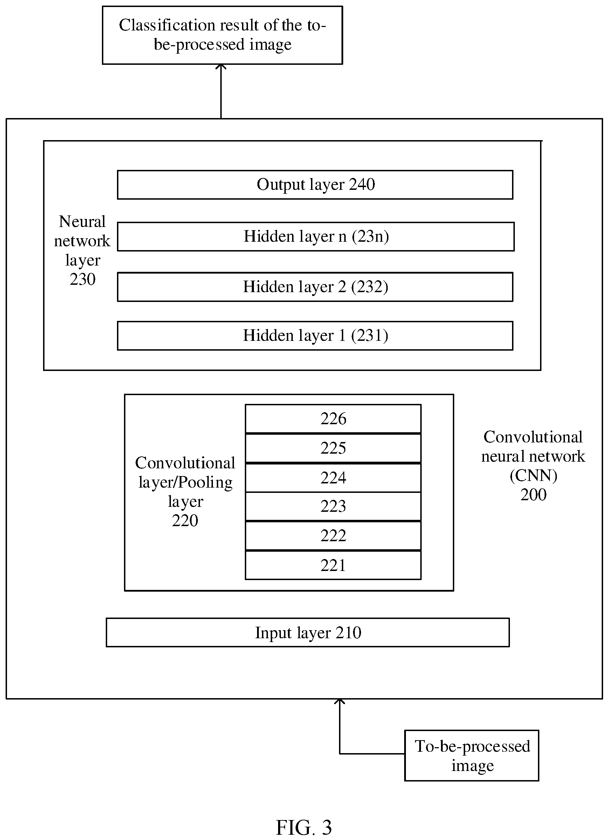

For example, the following describes the structure of the CNN in detail with reference to FIG. 3. As described in the foregoing basic concepts, a convolutional neural network is a deep neural network with a convolutional structure, and is a deep learning (deep learning) architecture. In the deep learning architecture, multi-level learning is performed at different abstract levels by using a machine learning algorithm. As a deep learning architecture, the CNN is a feed-forward (feed-forward) artificial neural network, and each neuron in the feed-forward artificial neural network may respond to an image input to the feed-forward artificial neural network.

As shown in FIG. 3, a convolutional neural network (CNN) 200 may include an input layer 210, a convolutional layer/pooling layer 220 (the pooling layer is optional), and a neural network layer 230. In the following implementations of this application, for ease of understanding, each layer is referred to as a stage. The following describes related content of these layers in detail.

Convolutional layer/pooling layer 220:

Convolutional layer:

As shown in FIG. 3, for example, the convolutional layer/pooling layer 220 may include layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layer 221 and the layer 222 are convolutional layers, the layer 223 is a pooling layer, the layer 224 and the layer 225 are convolutional layers, and the layer 226 is a pooling layer. In other words, an output of a convolutional layer may be used as an input of a following pooling layer, or may be used as an input of another convolutional layer, to continue to perform a convolution operation.

The following uses the convolutional layer 221 as an example to describe an internal working principle of one convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes an input image pixel by pixel (or two pixels by two pixels, ..., which depends on a value of a stride (stride)) in a horizontal direction, to extract a specific feature from the image. A size of the weight matrix should be related to a size of the picture. It should be noted that a depth dimension (depth dimension) of the weight matrix is the same as a depth dimension of the input picture. In a process of performing a convolution operation, the weight matrix extends to an entire depth of the input picture. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional picture. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. Sizes of the plurality of weight matrices (rows x columns) are the same. Sizes of feature maps extracted from the plurality of weight matrices with the same size are also the same, and then the plurality of extracted feature maps with the same size are combined to form an output of the convolution operation.

During actual application, weighted values in the weight matrices need to be obtained through massive training. Weight matrices formed by weighted values obtained through training may be used to extract information from an input image, so that the convolutional neural network 200 performs correct prediction.

When the convolutional neural network 200 has a plurality of convolutional layers, a larger quantity of general features are usually extracted at an initial convolutional layer (for example, the convolutional layer 221). The general features may also be referred to as low-level features. As a depth of the convolutional neural network 200 increases, a feature extracted at a more subsequent convolutional layer (for example, the convolutional layer 226), for example, a high-level semantic feature, is more complex. A feature with higher semantics is more applicable to a to-be-resolved problem.

Pooling layer/pooling layer 220:

Because a quantity of training parameters usually needs to be reduced, a pooling layer usually needs to be periodically introduced after a convolutional layer, and the pooling layer may also be referred to as a down-sampling layer. For the layers 221 to 226 in the layer 220 shown in FIG. 3, one convolutional layer may be followed by one pooling layer, or a plurality of convolutional layers may be followed by one or more pooling layers. During picture processing, the pooling layer is only used to reduce a space size of the picture. The pooling layer may include an average pooling operator and/or a maximum pooling operator, to perform sampling on the input picture to obtain a picture with a relatively small size. The average pooling operator may be used perform calculation on pixel values in the image in a specific range, to generate an average value, and the average value is used as an average pooling result. The maximum pooling operator may be used to select a pixel with a maximum value in a specific range as a maximum pooling result. In addition, similar to that the size of the weight matrix at the convolutional layer needs to be related to the size of the picture, an operator at the pooling layer also needs to be related to the size of the picture. A size of a processed picture output from the pooling layer may be less than a size of a picture input to the pooling layer. Each pixel in the picture output from the pooling layer represents an average value or a maximum value of a corresponding sub-region of the picture input to the pooling layer.

Neural network layer 230:

After processing performed at the convolutional layer/pooling layer 220, the convolutional neural network 200 still cannot output required output information. As described above, at the convolutional layer/pooling layer 220, only a feature is extracted, and parameters brought by an input image are reduced. However, to generate final output information (required class information or other related information), the convolutional neural network 200 needs to use the neural network layer 230 to generate an output of one required class or a group of required classes. Therefore, the neural network layer 230 may include a plurality of intermediate layers (231, 232, ..., and 23n shown in FIG. 3) and an output layer 240. The output layer may also be referred to as a fully connected (fully connected, FC) layer. Parameters included in the plurality of intermediate layers may be obtained through pre-training based on related training data of a specific task type. For example, the task type may include image recognition, image classification, super-resolution image reconstruction, and the like.

At the neural network layer 230, the plurality of intermediate layers are followed by the output layer 240, namely, a last layer of the entire convolutional neural network 200. The output layer 240 has a loss function similar to a categorical cross entropy, and the loss function is specifically used to calculate a prediction error. Once forward propagation (for example, propagation in a direction from 210 to 240 in FIG. 3) of the entire convolutional neural network 200 is completed, back propagation (for example, propagation in a direction from 240 to 210 in FIG. 3) is started to update a weight value and a deviation of each layer mentioned above, to reduce a loss of the convolutional neural network 200 and an error between a result output by the convolutional neural network 200 through the output layer and an ideal result.

It should be noted that the convolutional neural network 200 shown in FIG. 3 is merely an example convolutional neural network. During specific application, the convolutional neural network may alternatively exist in a form of another network model.

In this application, a to-be-processed image may be processed based on the convolutional neural network 200 shown in FIG. 3, to obtain a classification result of the to-be-processed image. As shown in FIG. 3, the classification result of the to-be-processed image is output after the to-be-processed image is processed by the input layer 210, the convolutional layer/pooling layer 220, and the neural network layer 230.

A neural network parameter quantization method provided in this embodiment of this application may be performed on a server, or may be performed on a terminal device. The terminal device may be a mobile phone with an image processing function, a tablet personal computer (tablet personal computer, TPC), a media player, a smart television, a laptop computer (laptop computer, LC), a personal digital assistant (personal digital assistant, PDA), a personal computer (personal computer, PC), a camera, a video camera, a smartwatch, a wearable device (wearable device, WD), an autonomous vehicle, or the like. This is not limited in this embodiment of this application.

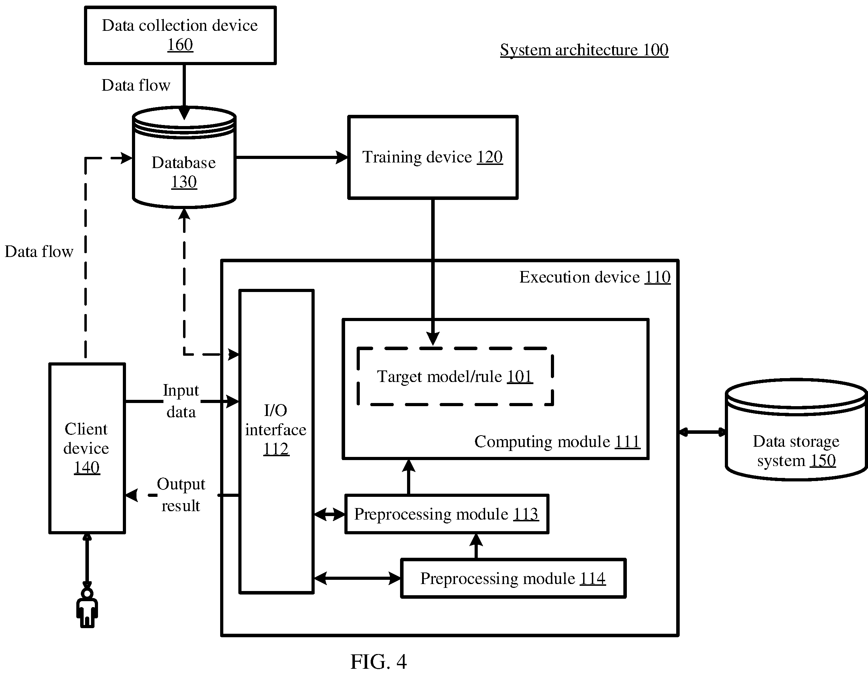

As shown in FIG. 4, an embodiment of this application provides a system architecture 100. In FIG. 4, a data collection device 160 is configured to collect training data. In some optional implementations, for an image classification method, the training data may include a training image and a classification result corresponding to the training image, and the classification result corresponding to the training image may be a result of manual pre-labeling.

After collecting the training data, the data collection device 160 stores the training data in a database 130, and a training device 120 obtains a target model/rule 101 through training based on the training data maintained in the database 130. Optionally, the training set mentioned in the following implementations of this application may be obtained from the database 130, or may be obtained based on data entered by a user.

The target model/rule 101 may be a neural network mentioned below in embodiments of this application.

The following describes the target model/rule 101 obtained by the training device 120 based on the training data. The training device 120 processes an input original image, and compares an output image with the original image until a difference between the image output by the training device 120 and the original image is less than a specific threshold. In this way, training of the target model/rule 101 is completed.

The target model/rule 101 may be configured to implement the first neural network obtained by using the neural network parameter quantization method in embodiments of this application. In other words, to-be-processed data (for example, an image) which is preprocessed is input to the target module/rule 101, to obtain a processing result. The target model/rule 101 in this embodiment of this application may be specifically the first neural network mentioned below in this application. The first neural network may be a neural network such as a CNN, a DNN, or an RNN. It should be noted that, during actual application, the training data maintained in the database 130 is not necessarily all collected by the data collection device 160, and may be received from another device. In addition, it should be noted that the training device 120 trains the target model/rule 101 not necessarily completely based on the training data maintained in the database 130, and may obtain training data from a cloud or another place to perform model training. The foregoing descriptions should not be construed as a limitation on this embodiment of this application.

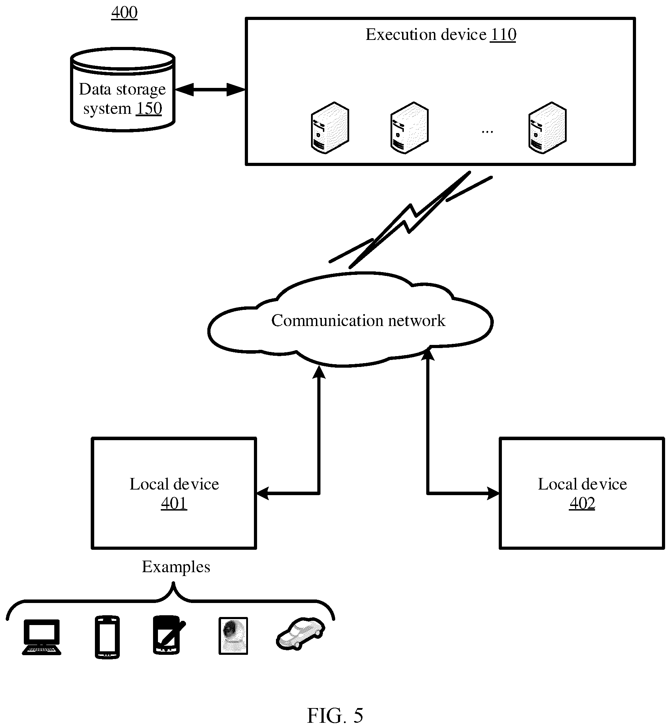

The target model/rule 101 obtained through training by the training device 120 may be applied to different systems or devices, for example, an execution device 110 shown in FIG. 5. The execution device 110 may also be referred to as a computing device, and may be a terminal, for example, a mobile phone terminal, a tablet computer, a laptop computer, augmented reality (augmented reality, AR)/virtual reality (virtual reality, VR), a vehicle-mounted terminal, a server, a cloud device, or the like. In FIG. 5, the execution device 110 configures an input/output (input/output, I/O) interface 112, configured to exchange data with an external device. A user may input data to the I/O interface 112 by using the client device 140, where the input data in this embodiment of this application may include to-be-processed data input by the client device.

A preprocessing module 113 and a preprocessing module 114 are configured to perform preprocessing based on the input data (for example, the to-be-processed data) received by the I/O interface 112. In embodiments of this application, the preprocessing module 113 and the preprocessing module 114 may not exist (or only one of the preprocessing module 113 and the preprocessing module 114 exists), and a computing module 111 is directly configured to process the input data.

In a related processing procedure in which the execution device 110 preprocesses the input data or a computing module 111 of the execution device 110 performs computation, the execution device 110 may invoke data, code, and the like in a data storage system 150 to implement corresponding processing, or may store, into the data storage system 150, data, an instruction, and the like obtained through corresponding processing.

Finally, the I/O interface 112 returns the processing result to the client device 140, to provide the processing result to the user. For example, if the first neural network is used to perform image classification, the processing result is a classification result. Then, the I/O interface 112 returns the obtained classification result to the client device 140, to provide the classification result to the user.

It should be noted that the training device 120 may generate corresponding target models/rules 101 for different targets or different tasks based on different training data. The corresponding target models/rules 101 may be used to achieve the foregoing targets or complete the foregoing tasks, to provide a needed result for the user. In some scenarios, the execution device 110 and the training device 120 may be a same device, or may be located inside a same computing device. For ease of understanding, the execution device and the training device are separately described in this application, and this is not limited.

In the case shown in FIG. 4, the user may manually give the input data, where the manual giving may be operated in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data that is input to the I/O interface 112 and a prediction label that is output from the I/O interface 112 that are shown in the figure, and store the new sample data in the database 130. It is clear that the client device 140 may alternatively not perform collection. Instead, the I/O interface 112 directly stores, in the database 130 as new sample data, the input data input to the I/O interface 112 and the prediction label output from the I/O interface 112.

It should be noted that FIG. 4 is merely a diagram of the system architecture according to an embodiment of this application. A location relationship between a device, a component, a module, and the like shown in the figure constitutes no limitation. For example, in FIG. 4, the data storage system 150 is an external memory relative to the execution device 110. In another case, the data storage system 150 may alternatively be disposed in the execution device 110.

As shown in FIG. 4, the target model/rule 101 is obtained through training by the training device 120. The target model/rule 101 in this embodiment of this application may be a neural network mentioned below in this application.

Specifically, the neural network provided in this embodiment of this application may be a CNN, a deep convolutional neural network (deep convolutional neural network, DCNN), a recurrent neural network (recurrent neural network, RNN), or the like.

Refer to FIG. 5. An embodiment of this application further provides a system architecture 400. An execution device 110 is implemented by one or more servers. Optionally, the execution device 110 cooperates with another computing device, for example, a device like a data memory, a router, or a load balancer. The execution device 110 may be disposed on one physical site, or distributed on a plurality of physical sites. The execution device 110 may implement steps of a neural network parameter quantization method mentioned below in this application by using data in a data storage system 150 or by invoking program code in the data storage system 150.

A user may operate user equipment (for example, a local device 401 and a local device 402) to interact with the execution device 110. Each local device may represent any computation device, for example, a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 110 through a communication network of any communication mechanism/communication standard. The communication network may be a wide area network, a local area network, a point-to-point connection, or any combination thereof. Specifically, the communication network may include a wireless network, a wired network, a combination of a wireless network and a wired network, or the like. The wireless network includes but is not limited to any one or any combination of a 5th generation (5th Generation, 5G) mobile communication technology system, a long term evolution (long term evolution, LTE) system, a global system for mobile communications (global system for mobile communications, GSM), a code division multiple access (code division multiple access, CDMA) network, a wideband code division multiple access (wideband code division multiple access, WCDMA) network, wireless fidelity (wireless fidelity, Wi-Fi), Bluetooth (Bluetooth), ZigBee (ZigBee), a radio frequency identification (Radio Frequency Identification, RFID) technology, long range (Long Range, Lora) wireless communication, and near field communication (near field communication, NFC). The wired network may include an optical fiber communication network, a network including coaxial cables, or the like.

In another implementation, one or more aspects of the execution device 110 may be implemented by each local device. For example, the local device 401 may provide local data or feed back a calculation result for the execution device 110.

It should be noted that all functions of the execution device 110 may also be implemented by the local device. For example, the local device 401 implements the functions of the execution device 110 and provides a service for a user of the local device 401, or provides a service for a user of the local device 402.

As performance of a neural network model becomes stronger, parameters of the neural network model also increase. When a network is running, requirements for and consumption of storage, computing, bandwidth, and energy are increasing. This is not conducive to deployment of an artificial intelligence algorithm in a hardware terminal device with limited resources. Reducing storage and computing requirements by using technical means such as pruning and compression of a neural network has become an important part of implementation of a neural network algorithm in an actual terminal.

Model compression is a common means of constructing a lightweight neural network. FP32 (32-bit floating-point data) is usually used for storage in a neural network. Generally, a neural network has good robustness, and precision of a parameter of a large neural network is reduced through quantization, coding, and the like, so that the neural network can still maintain good performance. Common low-precision data includes numerical formats such as FP16 (half-precision floating point), INT16 (16-bit fixed-point integer), INT8 (8-bit fixed-point integer), INT4 (4-bit fixed-point integer), and 1-bit. With network performance and a model compression degree comprehensively considered, a weight parameter is converted from a 32-bit floating-point (FP32) to an 8-bit fixed-point integer (INT8). This is a common quantization method.

For another example, using a lightweight convolution solution is another technical means for constructing a lightweight neural network. For most common convolutional neural networks, multiplication convolution solutions are used, and a core is to extract a similarity between a filter and an input image by using a convolution multiplication operation. For an adder neural network, for example, an adder network quantization technology that can be shared (share), INT8 quantization is performed by using a quantization parameter s after a weight is subtracted from an input image, and good effect is achieved during INT8 quantization.

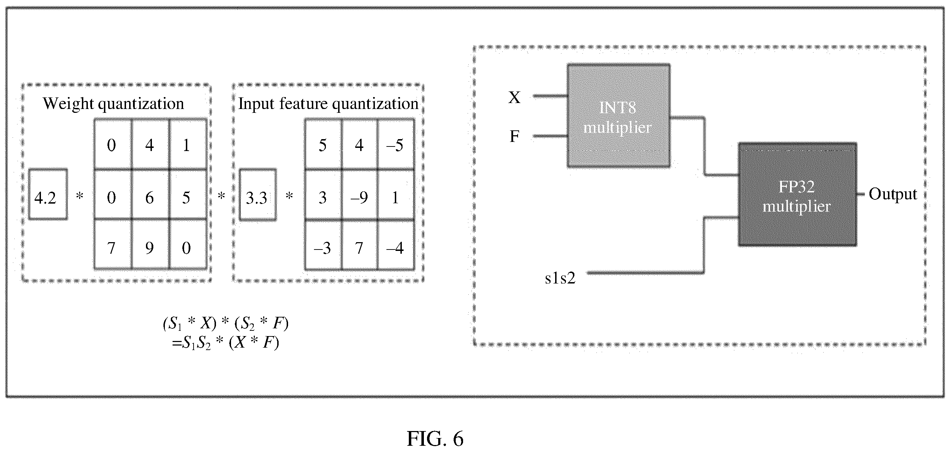

For example, as shown in FIG. 6, in a common CNN quantization technology, INT8 quantization is separately performed on a weight and an input image. This method corresponds to two scaling coefficients s1 and s2, and hardware of the method requires two FP32 multipliers and one INT8 multiplier. However, for the foregoing common quantization method, during multiplication network quantization, INT8 quantization is separately performed on weight data and input image feature data by using a non-shared scale at each layer. However, when this discrete quantization manner is applied to an adder network, a required multiplication operation increases calculation energy consumption. In addition, because a scaling coefficient of weight data is not necessarily equal to that of input feature image data, non-INT8 numerical calculation may occur in a final result.

In addition, only one shared parameter is used to quantize a convolution kernel parameter and a feature of the adder network. This inevitably reduces an expression capability of the adder network, and verifies that the adder network is basically lossless only in 8-bit quantization. In low-bit (< 8 bits) quantization, a precision loss of the quantized adder network is large. In another aspect, as a quantity of bits decreases, energy consumption of basic operations and a required chip area decrease to different degrees.

Therefore, this application provides a neural network parameter quantization method that can be applied to various neural network quantization scenarios, to implement efficient low-bit quantization.

Based on the foregoing description, the following describes in detail the neural network parameter quantization method provided in this application.

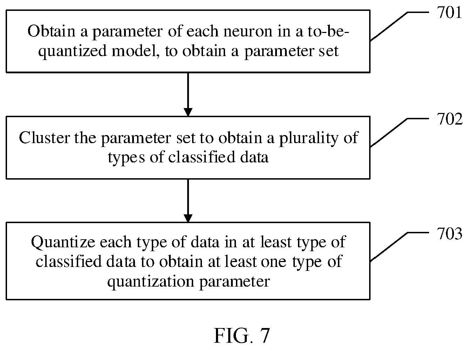

FIG. 7 is a schematic flowchart of a neural network parameter quantization method according to this application. The method includes the following steps.

701: Obtain a parameter of each neuron in a to-be-quantized model, to obtain a parameter set.

The to-be-quantized model may include an adder network, a multiplication network, or the like. The to-be-quantized model may include a plurality of neurons, and a parameter of each neuron may be read to obtain the parameter set of the to-be-quantized model.

The parameter of each neuron may include a parameter value in the neuron, or may include a weight occupied by an output of a neuron at each intermediate layer. Therefore, when subsequent quantization is performed, most parameters in the neural network may be quantized, to obtain a lightweight model.

702: Cluster the parameter set to obtain a plurality of types of classified data.

After the parameter set is obtained, parameters in the parameter set may be clustered to obtain one or more types of classified data. It may be understood that the parameters in the parameter set are classified into one or more types through clustering.

A specific clustering manner may include K-Means clustering, mean shift clustering, a density-based clustering method (density-Based spatial clustering of applications with noise, DBSCAN), expectation-maximization clustering based on a Gaussian mixture model, and the like. Specifically, a matched clustering manner may be selected based on an actual usage scenario. This is not limited in this application.

Optionally, a specific process of obtaining the plurality of types of classified data may include: clustering the parameters in the parameter set to obtain one or more types of classified data, and extracting a preset quantity of parameters from the one or more types of classified data to obtain the foregoing plurality of types of classified data. Therefore, in this implementation of this application, a threshold does not need to be specified, and a calculation amount for the threshold is reduced by extracting a specific quantity. This improves deployment generalization of the method provided in this application.

703: Quantize each type of data in the plurality of types of classified data to obtain at least one type of quantization parameter.

After clustering is performed to obtain the plurality of types of classified data, each type of classified data may be quantized, that is, bits occupied by a parameter in each type of classified data are reduced, to obtain the at least one type of quantization parameter. The at least one type of quantization parameter is used to obtain a compression model. For example, if a data type of a parameter in the to-be-quantized model is FP16, the data type of the parameter may be converted into INT8, to reduce bits occupied by the parameter and implement low-bit quantization of the parameter. This implements model compression, and a lightweight model is obtained.

Generally, parameters in the parameter set may be classified into parameter values of neurons, for example, referred to as weight parameters, and output feature values of neurons, for example, referred to as feature parameters. The feature parameters may include feature values output by the neurons in the to-be-quantized model after an input image is input to the to-be-quantized model, and the input image may be a preset image, or may be a randomly selected image. The feature parameters and the weight parameters usually affect each other. However, ranges of the two types of parameters may be different. If only one type of quantization parameter is used for quantization, a part of quantization parameters may be truncated or a waste of bits may be caused. For example, if a range of activation values is used to quantize weights, most weights are truncated, and this greatly damages precision of a quantization model. If a range of weights is used to quantize activation values, only a few bits can be used, and this causes a waste of bits. In this application, a weight range may be truncated to a feature range, to effectively use bits as much as possible without reducing model precision, and avoid a waste of bits.

Therefore, in this implementation of this application, the parameters in the to-be-quantized model are clustered, and the parameters are classified into a plurality of types and then quantized, so that classification and quantization can be implemented, and an expression capability of a model obtained through quantization can be improved. Especially for an adder network, instead of quantization performed by using a shared parameter, quantization after clustering provided in this application can significantly improve a model expression capability, to obtain a lightweight model with higher output precision. In addition, according to the method provided in this application, the parameters are clustered and then quantized, so that a lightweight model with a more accurate output can be obtained only by increasing a small workload. This can be applicable to more scenarios in which a lightweight model needs to be deployed.

The foregoing describes a method procedure provided in this application. For ease of understanding, the following describes in more detail the procedure of the neural network parameter quantization method provided in this application with reference to a specific usage scenario.

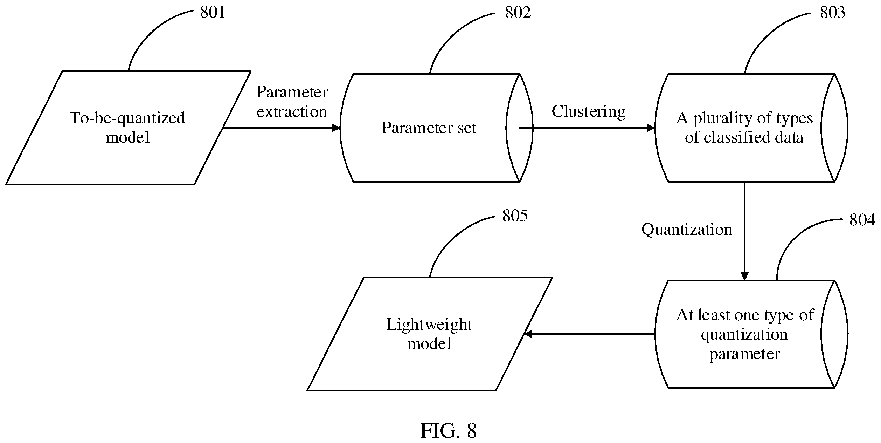

FIG. 8 is a schematic flowchart of another neural network parameter quantization method according to an embodiment of this application. The method includes the following steps.

First, a to-be-quantized model 801 is obtained. The to-be-quantized model 801 may include a multiplication network, an adder network, or the like.

The method provided in this application may be deployed on a server, or may be deployed on a terminal. For example, the method provided in this application may be deployed on a server. After the server quantizes the to-be-quantized model, an obtained lightweight model may be deployed on a terminal, so that the lightweight model can run on the terminal, and running efficiency of the terminal can be improved.

The to-be-quantized model may be specifically a CNN, an ANN, an RNN, or the like. The to-be-quantized model may include a plurality of network layers that may be divided into, for example, an input layer, an intermediate layer, and an output layer. Each network layer may include one or more neurons. Generally, an output of a neuron at an upper-layer network layer may be used as an input of a neural network at a lower-layer network layer. Specifically, for example, the to-be-quantized model may be used to perform one or more tasks such as an image recognition task, a target detection task, a segmentation task, and a classification task. Generally, to reduce computing resources required for running the neural network, the neural network may be compressed, to reduce the computing resources required for running the neural network while maintaining output precision of the neural network.

The method provided in this application may be applicable to a plurality of types of neural networks, and a specific type of the neural network may be determined based on an actual usage scenario. This is not limited in this application.

Then, parameters are extracted from the to-be-quantized model 801 to obtain a parameter set 802.

Specifically, a parameter like a parameter inside each neuron or an output weight of each neuron may be extracted to obtain the parameter set. For ease of differentiation, in the following, a feature value output by each neuron is referred to as a feature parameter (represented as w), and a convolution kernel parameter of each neuron is referred to as a weight parameter (represented as x).

For example, the to-be-quantized model 801 may include a plurality of neurons, and each neuron has a parameter. For example, each neuron may include one or more of the following: average pooling (avg_pool_3 $\times$ 3) with a pooling kernel size of 3 $\times$ 3, maximum pooling (max_pool_3 $\times$ 3) with a pooling kernel size of 3 $\times$ 3, separable convolution (sep_conv_3 $\times$ 3) with a convolution kernel size of 3 $\times$ 3, separable convolution (sep_conv_5 $\times$ 5) with a convolution kernel size of 5 $\times$ 5, dilated convolution (dil_conv_3 $\times$ 3) with a convolution kernel size of 3 $\times$ 3 and a dilation rate of 2, dilated convolution (dil_conv_5 $\times$ 5) with a convolution kernel size of 5 $\times$ 5 and a dilation rate of 2, a skip-connection (skip-connect) operation, a zero operation (Zero, each neuron at a corresponding position is set to zero), or the like. Parameters may be extracted from these operation manners, to obtain a parameter inside a neuron, namely, the weight parameter. An output of a neuron at an upper layer may be used as an input of a neuron at a lower layer, and an output of each neuron may be different. After an input image is input to the to-be-quantized model, a feature value output by each neuron is extracted, to obtain the feature parameter. A parameter inside the neuron or a feature value output by each neuron may form the parameter set 802.

Subsequently, parameters in the parameter set 802 are clustered to obtain a plurality of types of classified data 803.

For example, clustering is performed in a clustering manner like K-Means clustering, mean shift clustering, or DBSCAN, parameters are classified into a plurality of types, and a specific quantity of parameters are extracted from each type of parameters. This reduces quantization of abnormal parameters and improves an expression capability of a model. For example, the weight parameter and the feature parameter may be separately classified, to avoid using a same quantization parameter for the feature parameter and the weight. In addition, compared with truncating a parameter by selecting a threshold, in this application, extracting a specific quantity of parameters from each type of parameters can reduce a workload of calculating a threshold.

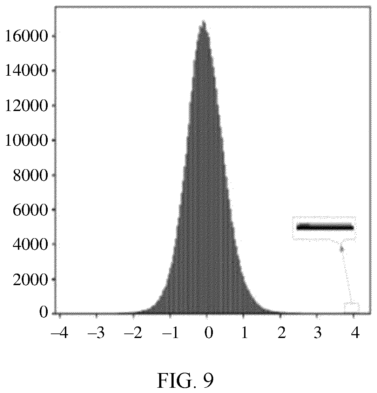

Generally, the feature parameters have great impact on model feature extraction. Therefore, outliers of feature parameters have great impact on a range of features of model statistics, and further affects a quantized scaling coefficient. For example, as shown in FIG. 9, absolute values of feature parameters are first obtained, then the absolute values are sorted in ascending order, and finally truncation is performed based on a specific proportion or quantity for subsequent quantization.

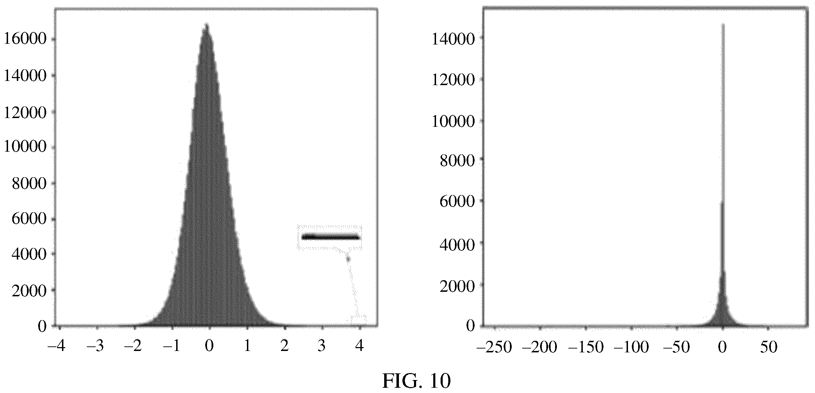

In addition, for an adder network, a shared quantization parameter is usually used for a feature parameter and a weight parameter. As shown in FIG. 10, ranges of feature parameters and weight parameters are usually greatly different. Therefore, if a range of an activation value (feature) is used to quantize weights, most weights are truncated, and precision of a quantization model is greatly affected. If a range of weights is used to quantize activation values, only a few bits can be used, and this causes a waste of bits. However, in the method provided in this application, the parameter set is clustered, so that truncation impact between the weight parameter and the feature parameter can be avoided during parameter extracting, and subsequent quantization of the weight parameters and the feature parameters can be effectively decoupled.

It may be understood that in this application, a range of the weight parameters is truncated to a range covered by the feature parameters, and truncated weight parameter values and feature parameter values are integrated into a bias ratio (bias). To be specific, most weight parameters and feature parameters are retained without affecting model precision. This improves an expression capability of a quantized lightweight model.

Subsequently, the plurality of types of classified data 803 is quantized to obtain at least one type of quantization parameter 804.

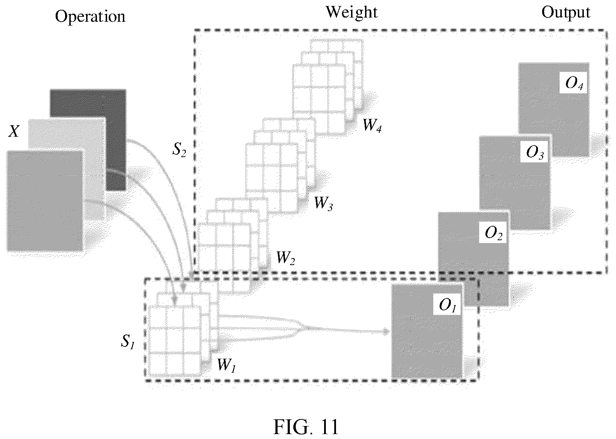

For example, a structure of the to-be-quantized model may be shown in FIG. 11. A neural network may be divided into a plurality of layer. In each neuron, a weight parameter may be represented as x, and a feature parameter is represented as w.

A plurality of quantization manners may be used. For example, a symmetric quantization method is used as an example. First, a term with a maximum absolute value is found in all weight parameters in each type of classified data, and is denoted as $max(|X_f|)$. Secondly, a number N of bits to be quantized and a numerical representation range thereof are determined: $[-2^{n-1}, 2^{n-1}]$. INT8 is used as an example, and a numerical range that can be represented by INT8 is $[-128, 127]$. Thirdly, a scaling coefficient of a weight parameter is determined, for example, represented as $scale = (2^{n-1} - 1) / max(|X_f|)$. Finally, all parameters of this group of classified data are multiplied by the coefficient, and an approximate integer is obtained. In this way, parameters of this layer are quantized.

Because $scale = (2^{n-1} - 1) / max(|v|)$, and $v = x$ or $w$, that is, scale is related to $max(|w|)$, in this application, $max(|w|)$ is first extracted as a feature parameter of a convolution kernel, and then convolution kernel parameters are clustered in a K-Means clustering manner. In this application, a quantization solution of a plurality of shared scales introduces a very small amount of additional calculation, and therefore does not increase power consumption.

Subsequently, the obtained at least one type of quantization parameter is used to form a lightweight model 805. A lightweight model may be deployed in various devices, for example, deployed in a terminal or a server with low computing power, for example, a mobile phone or a band.

Generally, stronger performance of a neural network indicates a larger scale of the neural network and more parameters, and requirements for and consumption of storage, bandwidth, energy, and computing resources are higher. According to the neural network quantization method provided in this application, a model can be quantized to obtain a lightweight model, so that the lightweight model can be deployed in various devices. A lightweight model with an accurate output can be obtained while requirements for storage, bandwidth, energy, and computing resources are reduced. The lightweight model is applicable to more scenarios, and has a stronger generalization capability.

The method provided in this application may be deployed in various terminals or servers, especially in a resource-limited device. According to the method provided in this application, a quantized lightweight model can be obtained while an expression capability of the model is ensured. Therefore, a more accurate output result can also be obtained in the resource-limited device.

For example, the method provided in this application may be deployed in a neural network accelerator, and the neural network accelerator improves a running speed of a convolutional network in a hardware module through parallel computing or the like. In this application, hardware resource consumption can be greatly reduced for an adder network, so that hardware resources can be more fully utilized to construct a convolution acceleration module with a higher degree of parallelism. This further improves acceleration effect.

For another example, the method provided in this application may be deployed on a low-power consumption AI chip. In hardware terminal deployment of an artificial neural network chip, power consumption is a core issue. In this application, for an adder convolution kernel, operating power consumption of a circuit can be effectively reduced, so that an AI chip can be deployed on a resource-limited terminal device.

For ease of understanding, effect of deploying the method provided in this application in some common datasets may be shown in Table 1.

**Table 1**

| Model | Bits | Group | CIFAR-10 | | CIFAR-100 | |
|---|---|---|---|---|---|---|
| | | | PTQ | QAT | PTQ | QAT |
| VGG-Small | 8 | 1 | 93.43 | | 73.50 | |
| | | 4 | 93.42 | | 73.56 | |
| | 6 | 1 | 93.38 | | 73.43 | |
| | | 4 | 93.48 | | 73.62 | |
| | 5 | 1 | 93.33 | | 73.36 | |
| | | 4 | 93.41 | | 73.50 | |
| | 4 | 1 | 93.08 | 93.26 | 73.00 | 73.34 |
| | | 4 | 93.20 | 93.46 | 73.15 | 73.58 |
| ResNet-20 | 8 | 1 | 91.33 | | 67.52 | |
| | | 4 | 91.40 | | 67.58 | |
| | 6 | 1 | 91.30 | | 67.31 | |
| | | 4 | 91.32 | | 67.63 | |
| | 5 | 1 | 91.03 | | 66.82 | |
| | | 4 | 91.36 | | 67.46 | |
| | 4 | 1 | 90.39 | 91.04 | 65.05 | 66.33 |
| | | 4 | 90.72 | 91.21 | 65.76 | 67.35 |
| ResNet-32 | 8 | 1 | 92.65 | | 70.20 | |
| | | 4 | 92.76 | | 70.46 | |
| | 6 | 1 | 92.59 | | 69.80 | |
| | | 4 | 92.62 | | 70.08 | |
| | 5 | 1 | 92.55 | | 69.70 | |
| | | 4 | 92.59 | | 70.09 | |
| | 4 | 1 | 91.61 | 92.14 | 67.91 | 69.09 |
| | | 4 | 91.73 | 92.35 | 68.24 | 69.38 |

It can be learned from Table 1 that, during quantization of a relatively high bit (for example, 8, 6, and 5), when only post-quantization (PTQ) is used in the quantization solution in which groups share scales provided in this application, a quantization model precision loss is very small. During 4-bit quantization, a quantization model precision loss is very small through training quantization (QAT).

In addition, tests are performed in ImageNet, as shown in Table 2.

**Table 2**

| Model | Bits | Group | Top-1 Acc (%) | | Top-5 Acc (%) | |
|---|---|---|---|---|---|---|
| | | | PTQ | QAT | PTQ | QAT |
| ResNet-18 | 8 | 1 | 67.8 | | 87.7 | |
| | | 4 | 67.7 | | 87.7 | |
| | 6 | 1 | 67.4 | | 87.2 | |
| | | 4 | 67.7 | | 87.6 | |
| | 5 | 1 | 66.9 | | 87.0 | |
| | | 4 | 67.4 | | 87.3 | |
| | 4 | 1 | 66.3 | 67.1 | 86.5 | 87.2 |
| | | 4 | 66.5 | 67.4 | 86.6 | 87.4 |
| ResNet-50 | 8 | 1 | 75.0 | | 91.9 | |
| | | 4 | 75.0 | | 91.9 | |
| | 6 | 1 | 74.9 | | 91.8 | |
| | | 4 | 75.0 | | 91.8 | |
| | 5 | 1 | 74.5 | | 91.4 | |
| | | 4 | 74.7 | | 91.5 | |
| | 4 | 1 | 72.9 | 73.3 | 90.6 | 90.9 |
| | | 4 | 73.2 | 73.7 | 90.7 | 91.1 |

It can be learned from Table 2 that, during quantization of a relatively high bit (8, 6, and 5), when only post-quantization (PTQ) is used in the quantization solution of a group-shared scale provided in the present invention, a quantization model precision loss is very small. During 4-bit quantization, a quantization model precision loss is very small through training quantization (QAT).

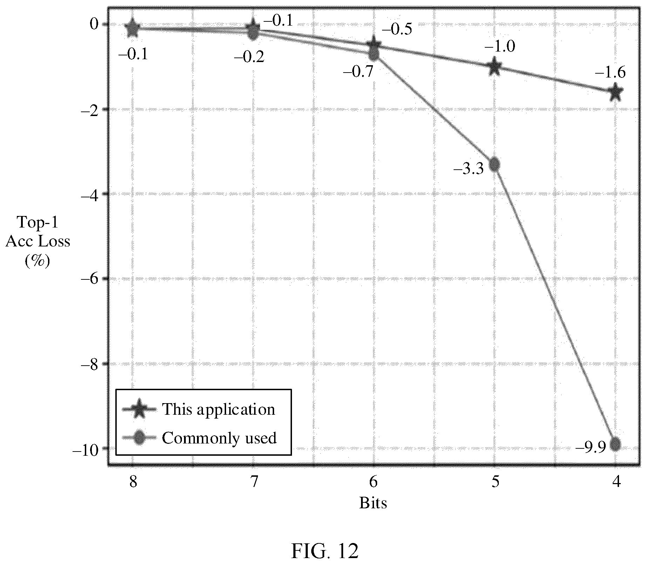

FIG. 12 is a diagram of precision comparison between a solution proposed in this application and a common quantization solution for an adder network. It can be learned that during 4-bit quantization, quantization precision of the method provided in this application is higher.

The foregoing describes in detail the procedure of the method provided in this application. The following describes an apparatus for performing the foregoing method.

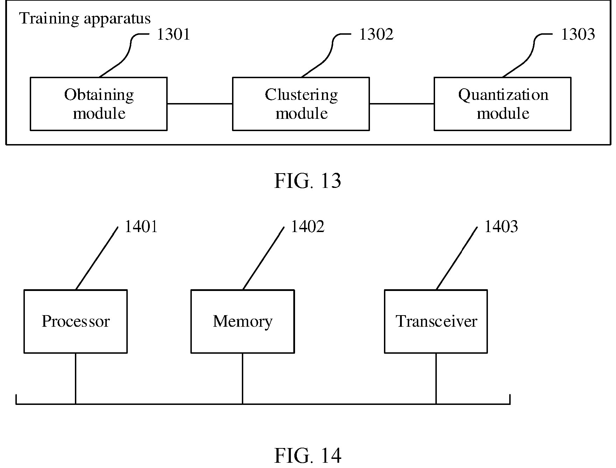

FIG. 13 is a structure of a neural network parameter quantization apparatus according to this application. The neural network parameter quantization apparatus includes:

an obtaining module 1301, configured to obtain a parameter of each neuron in a to-be-quantized model, to obtain a parameter set;
a clustering module 1302, configured to cluster the parameter set to obtain a plurality of types of classified data; and
a quantization module 1303, configured to quantize each type of classified data in the plurality of types of classified data to obtain at least one type of quantization parameter, where the at least one type of quantization parameter is used to obtain a compression model, and precision of the at least one type of quantization parameter is lower than precision of a parameter in the to-be-quantized model.

In a possible implementation, the clustering module 1302 is specifically configured to: cluster the parameter set to obtain at least one type of clustered data; and extract a preset quantity of parameters from each type of clustered data in the at least one type of clustered data, to obtain the plurality of types of classified data.

In a possible implementation, the parameter in the to-be-quantized model includes a parameter in a feature output by each neuron or a parameter value in each neuron.

In a possible implementation, the to-be-quantized model includes an adder neural network.

In a possible implementation, the compression model is used to perform at least one of image recognition, a classification task, or target detection.

FIG. 14 is a diagram of a structure of another neural network parameter quantization apparatus according to this application. The apparatus is described as follows:

The neural network parameter quantization apparatus may include a processor 1401 and a memory 1402. The processor 1401 and the memory 1402 are interconnected through a line. The memory 1402 stores program instructions and data.

The memory 1402 stores the program instructions and the data corresponding to steps corresponding to FIG. 7 to FIG. 12.

The processor 1401 is configured to perform the method steps performed by the neural network parameter quantization apparatus shown in any one of the foregoing embodiments in FIG. 7 to FIG. 12.

Optionally, the neural network parameter quantization apparatus may alternatively include a transceiver 1403, configured to receive or send data.

An embodiment of this application further provides a computer-readable storage medium. The computer-readable storage medium stores a program used to generate a vehicle travel speed. When the program is run on a computer, the computer is enabled to perform the steps in the methods described in the embodiments shown in FIG. 7 to FIG. 12.

Optionally, the neural network parameter quantization apparatus shown in FIG. 14 is a chip.

An embodiment of this application further provides a neural network parameter quantization apparatus. The neural network parameter quantization apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps performed by the neural network parameter quantization apparatus in any one of the foregoing embodiments in FIG. 7 to FIG. 12.

An embodiment of this application further provides a digital processing chip. A circuit and one or more interfaces that are configured to implement the processor 1401 or a function of the processor 1401 are integrated into the digital processing chip. When a memory is integrated into the digital processing chip, the digital processing chip may implement the method steps in any one or more embodiments in the foregoing embodiments. When a memory is not integrated into the digital processing chip, the digital processing chip may be connected to an external memory through a communication interface. The digital processing chip implements, based on program code stored in the external memory, the actions performed by the neural network parameter quantization apparatus in the foregoing embodiments.

An embodiment of this application further provides a computer program product. When the computer program product runs on a computer, the computer is enabled to perform the steps performed by the neural network parameter quantization apparatus in the method described in the embodiments shown in FIG. 7 to FIG. 12.

The neural network parameter quantization apparatus in this embodiment of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the server performs the neural network parameter quantization method described in the embodiments shown in FIG. 7 to FIG. 12. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may be a central processing unit (central processing units, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general purpose processor may be a microprocessor or any regular processor or the like.

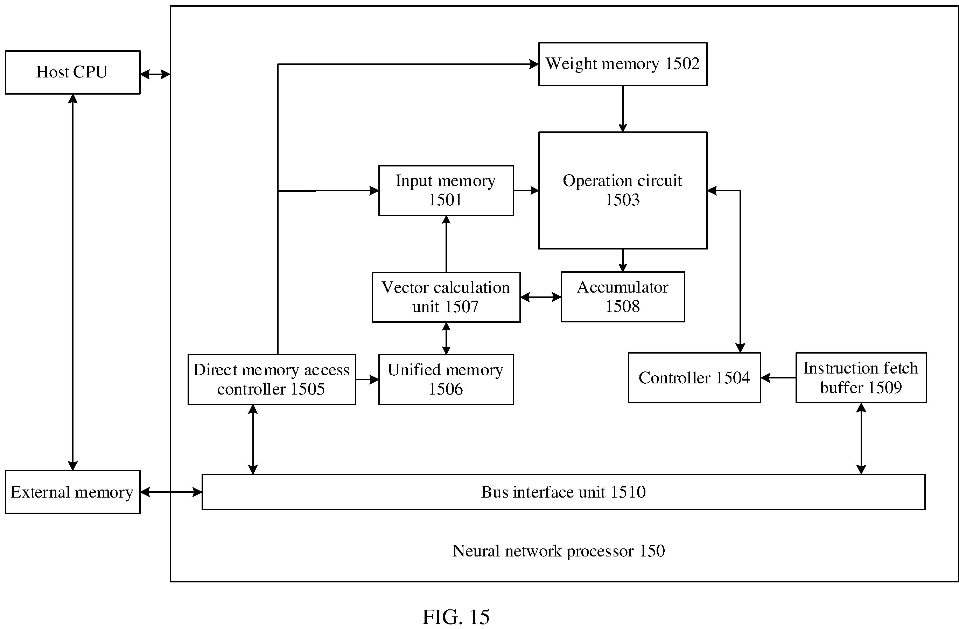

For example, FIG. 15 is a diagram of a structure of a chip according to an embodiment of this application. The chip may be represented as a neural-network processing unit NPU 150. The NPU 150 is mounted to a host CPU (host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of processing units (process engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches corresponding data of the matrix B from a weight memory 1502, and buffers the data on each PE in the operation circuit. The operation circuit obtains data of the matrix A from the input memory 1501 to perform a matrix operation on the matrix B, and stores an obtained partial result or an obtained final result of the matrix into an accumulator (accumulator) 1508.

A unified memory 1506 is configured to store input data and output data. Weight data is directly transferred to the weight memory 1502 by using a direct memory access controller (Direct Memory Access Controller, DMAC) DMAC 1505. The input data is also transferred to the unified memory 1506 by using the DMAC.

A bus interface unit (bus interface unit, BIU) 1510 is configured to interact with the DMAC and an instruction fetch buffer (instruction fetch buffer, IFB) 1509 through an AXI bus.

The bus interface unit (bus interface unit, BIU) 1510 is used by the instruction fetch buffer 1509 to obtain instructions from an external memory, and is further used by the direct memory access controller 1505 to obtain original data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector calculation unit 1507 includes a plurality of arithmetic processing units. When necessary, the vector calculation unit 1507 performs further processing on an output of the operation circuit, for example, vector multiplication, vector addition, an exponential operation, a logarithmic operation, and value comparison. The vector calculation unit 1507 is mainly configured to perform network calculation at a non-convolutional/fully connected layer in a neural network, for example, batch normalization (batch normalization), pixel-level summation, and up-sampling on a feature map.

In some implementations, the vector calculation unit 1507 can store a processed output vector in the unified memory 1506. For example, the vector calculation unit 1507 may apply a linear function and/or a non-linear function to the output of the operation circuit 1503, for example, perform linear interpolation on a feature map extracted by a convolutional layer, or for another example, accumulate value vectors to generate an activation value. In some implementations, the vector calculation unit 1507 generates a normalized value, a pixel-level summation value, or both. In some implementations, the processed output vector can be used as an activation input to the operation circuit 1503, for example, to be used in a subsequent layer in the neural network.

The instruction fetch buffer (instruction fetch buffer) 1509 connected to the controller 1504, configured to store instructions used by the controller 1504.

The unified memory 1506, the input memory 1501, the weight memory 1502, and the instruction fetch buffer 1509 are all on-chip memories. The external memory is private to a hardware architecture of the NPU.

An operation at each layer in a recurrent neural network may be performed by the operation circuit 1503 or the vector calculation unit 1507.

The processor mentioned above may be a general-purpose central processing unit, a microprocessor, an ASIC, or one or more integrated circuits for controlling program execution of the methods in FIG. 7 to FIG. 12.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other. This may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A neural network parameter quantization method, comprising:

   obtaining a parameter of each neuron in a to-be-quantized model, to obtain a parameter set;
   clustering the parameter set to obtain a plurality of types of classified data; and
   quantizing each type of classified data in the plurality of types of classified data to obtain at least one type of quantization parameter, wherein the at least one type of quantization parameter is used to obtain a compression model, and precision of the at least one type of quantization parameter is lower than precision of a parameter in the to-be-quantized model.

2. The method according to claim 1, wherein the clustering the parameter set to obtain a plurality of types of classified data comprises:

   clustering the parameter set to obtain at least one type of clustered data; and
   extracting a preset quantity of parameters from each type of clustered data in the at least one type of clustered data, to obtain the plurality of types of classified data.

3. The method according to claim 1 or 2, wherein the parameter in the to-be-quantized model comprises a parameter in a feature output by each neuron or a parameter value in each neuron.

4. The method according to any one of claims 1 to 3, wherein the to-be-quantized model comprises an adder neural network.

5. The method according to any one of claims 1 to 4, wherein the compression model is used to perform at least one of image recognition, a classification task, or target detection.

6. A neural network parameter quantization apparatus, comprising:

   an obtaining module, configured to obtain a parameter of each neuron in a to-be-quantized model, to obtain a parameter set;
   a clustering module, configured to cluster the parameter set to obtain a plurality of types of classified data; and
   a quantization module, configured to quantize each type of classified data in the plurality of types of classified data to obtain at least one type of quantization parameter, wherein the at least one type of quantization parameter is used to obtain a compression model, and precision of the at least one type of quantization parameter is lower than precision of a parameter in the to-be-quantized model.

7. The apparatus according to claim 6, wherein the clustering module is specifically configured to:

cluster the parameter set to obtain at least one type of clustered data; and
extract a preset quantity of parameters from each type of clustered data in the at least one type of clustered data, to obtain the plurality of types of classified data.

8. The apparatus according to claim 6 or 7, wherein the parameter in the to-be-quantized model comprises a parameter in a feature output by each neuron or a parameter value in each neuron.

9. The apparatus according to any one of claims 6 to 8, wherein the to-be-quantized model comprises an adder neural network.

10. The apparatus according to any one of claims 6 to 9, wherein the compression model is used to perform at least one of an image recognition, a classification task, or target detection.

11. A neural network parameter quantization apparatus, comprising a processor, wherein the processor is coupled to a memory, the memory stores a program, and when program instructions stored in the memory are executed by the processor, the method according to any one of claims 1 to 5 is performed.

12. A computer-readable storage medium, comprising a program, wherein when the program is executed by a processing unit, the method according to any one of claims 1 to 5 is performed.

FIG. 1

Convolution kernel

Input

Output

FIG. 2

| Classification result of the to-be-processed image |
|---|

| Neural network layer 230 | Output layer 240 |
| | Hidden layer n (23n) |
| | Hidden layer 2 (232) |
| | Hidden layer 1 (231) |

Convolutional neural network (CNN) 200

| Convolutional layer/Pooling layer 220 | 226 |
| | 225 |
| | 224 |
| | 223 |
| | 222 |
| | 221 |

| Input layer 210 |
|---|

| To-be-processed image |
|---|

FIG. 3

FIG. 4

400

Execution device 110

Data storage
system 150

Communication network

Local device
401

Local device
402

Examples

FIG. 5

FIG. 6

Obtain a parameter of each neuron in a to-be-
quantized model, to obtain a parameter set — 701

Cluster the parameter set to obtain a plurality of
types of classified data — 702

Quantize each type of data in at least type of
classified data to obtain at least one type of
quantization parameter — 703

FIG. 7

801

To-be-quantized
model

Parameter
extraction

802

Parameter set

Clustering

803

A plurality of types
of classified data

Quantization

805

Lightweight
model

804

At least one type of
quantization
parameter

FIG. 8

FIG. 9

FIG. 10

Operation　　　　　　　　　　Weight　　　　　　　　　　Output

FIG. 11

FIG. 12

Training apparatus

| Obtaining module 1301 | Clustering module 1302 | Quantization module 1303 |

FIG. 13

| Processor 1401 | Memory 1402 | Transceiver 1403 |

FIG. 14

| | | | Weight memory 1502 | |
|---|---|---|---|---|

| Host CPU | | | | |
|---|---|---|---|---|

Input memory 1501

Operation circuit 1503

Vector calculation unit 1507

Accumulator 1508

Direct memory access controller 1505

Unified memory 1506

Controller 1504

Instruction fetch buffer 1509

External memory

Bus interface unit 1510

Neural network processor 150

FIG. 15

## INTERNATIONAL SEARCH REPORT

| International application No. |
|---|
| **PCT/CN2023/095019** |

| **A.** | **CLASSIFICATION OF SUBJECT MATTER** |
|---|---|
| | G06N3/04(2023.01)i |

According to International Patent Classification (IPC) or to both national classification and IPC

| **B.** | **FIELDS SEARCHED** |
|---|---|

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 神经网络, 参数, 量化, 压缩, 聚类, 分类, 权值, 权重, 偏置, 输出, 激活图, 激活数据, neural network, parameters, quantify+, quantiz+, compress, cluster, classify, weight, bias, output, activation

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 115081588 A (HUAWEI TECHNOLOGIES CO., LTD.) 20 September 2022 (2022-09-20) claims 1-12 | 1-12 |
| X | CN 110309904 A (GUANGZHOU HOMEBAY TECHNOLOGY CO., LTD.) 08 October 2019 (2019-10-08) description, paragraphs 0002 and 0055-0120, and figure 4 | 1-12 |
| Y | CN 110309904 A (GUANGZHOU HOMEBAY TECHNOLOGY CO., LTD.) 08 October 2019 (2019-10-08) description, paragraphs 0002 and 0055-0120, and figure 4 | 3,8 |
| Y | CN 113396427 A (DEEPX CO., LTD.) 14 September 2021 (2021-09-14) description, paragraphs 0087-0090 | 3,8 |
| X | CN 110874627 A (HUAWEI TECHNOLOGIES CO., LTD.) 10 March 2020 (2020-03-10) description, paragraphs 0102-0134 and 0223-0234 | 1-12 |
| A | CN 113222098 A (SHANGHAI SHANGTANG INTELLIGENT TECHNOLOGY CO., LTD.) 06 August 2021 (2021-08-06) entire document | 1-12 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 June 2023** | **15 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><b>INTERNATIONAL SEARCH REPORT</b></td><td colspan="2">International application No.<br><br><b>PCT/CN2023/095019</b></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 109859281 A (HANGZHOU NATIONALCHIP SCIENCE & TECHNOLOGY CO., LTD.) 07 June 2019 (2019-06-07)<br>entire document | 1-12 |
| A | US 2020250539 A1 (SHANGHAI CAMBRICON INFORMATION TECHNOLOGY CO., LTD.) 06 August 2020 (2020-08-06)<br>entire document | 1-12 |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/CN2023/095019**</td></tr>
</table>

| Patent document cited in search report | | | Publication date (day/month/year) | Patent family member(s) | | | Publication date (day/month/year) |
|---|---|---|---|---|---|---|---|
| CN | 115081588 | A | 20 September 2022 | None | | | |
| CN | 110309904 | A | 08 October 2019 | None | | | |
| CN | 113396427 | A | 14 September 2021 | WO | 2020175862 | A1 | 03 September 2020 |
| | | | | US | 2021264232 | A1 | 26 August 2021 |
| | | | | US | 11263513 | B2 | 01 March 2022 |
| | | | | US | 2022138529 | A1 | 05 May 2022 |
| | | | | KR | 20200104201 | A | 03 September 2020 |
| | | | | KR | 20200106475 | A | 14 September 2020 |
| | | | | KR | 20210023912 | A | 04 March 2021 |
| | | | | KR | 20220142986 | A | 24 October 2022 |
| CN | 110874627 | A | 10 March 2020 | None | | | |
| CN | 113222098 | A | 06 August 2021 | None | | | |
| CN | 109859281 | A | 07 June 2019 | None | | | |
| US | 2020250539 | A1 | 06 August 2020 | EP | 3660706 | A1 | 03 June 2020 |
| | | | | KR | 20190104406 | A | 09 September 2019 |
| | | | | KR | 102434726 | B1 | 19 August 2022 |
| | | | | KR | 20200060301 | A | 29 May 2020 |
| | | | | KR | 102434728 | B1 | 19 August 2022 |
| | | | | US | 11593658 | B2 | 28 February 2023 |
| | | | | EP | 3627397 | A1 | 25 March 2020 |
| | | | | EP | 3627397 | A4 | 05 August 2020 |
| | | | | EP | 3627397 | B1 | 27 July 2022 |
| | | | | EP | 3660628 | A1 | 03 June 2020 |
| | | | | EP | 3667569 | A1 | 17 June 2020 |
| | | | | KR | 20200060302 | A | 29 May 2020 |
| | | | | KR | 102434729 | B1 | 19 August 2022 |
| | | | | WO | 2019076095 | A1 | 25 April 2019 |
| | | | | CN | 109697135 | A | 30 April 2019 |
| | | | | CN | 109697507 | A | 30 April 2019 |
| | | | | CN | 109697509 | A | 30 April 2019 |
| | | | | CN | 109725700 | A | 07 May 2019 |
| | | | | CN | 109726353 | A | 07 May 2019 |
| | | | | CN | 109903350 | A | 18 June 2019 |
| | | | | US | 2019354156 | A1 | 21 November 2019 |
| | | | | US | 2019354159 | A1 | 21 November 2019 |
| | | | | US | 2019354811 | A1 | 21 November 2019 |
| | | | | US | 2019370642 | A1 | 05 December 2019 |
| | | | | US | 2020265300 | A1 | 20 August 2020 |

Form PCT/ISA/210 (patent family annex) (July 2022)

**EP 4 535 229 A1**

**Patent documents cited in the description**

- CN 202210600648